# EUROPÄISCHE PATENTSCHRIFT

(11) **EP 0 566 839 B1**
(45) Veröffentlichungstag und Bekanntmachung des Hinweises auf die Patenterteilung: **10.04.1996**
(21) Anmeldenummer: 93102600.9
(22) Anmeldetag: 19.02.1993
(51) Int. Cl.: B65G 57/11, B65G 57/22

(54) **Palettierer**
Palletizer
Palettiseur

(30) Priorität: 23.04.1992 DE 4213351; 14.09.1992 DE 4230711
(43) Veröffentlichungstag der Anmeldung: 27.10.1993
(73) Patentinhaber: Langhammer, Heinrich, D-67304 Eisenberg (DE)
(72) Erfinder: Langhammer, Heinrich, D-67304 Eisenberg (DE)
(74) Vertreter: Zellentin, Wiger, Dipl.-Ing.

(56) Entgegenhaltungen:
- DD-A- 131 362
- FR-A- 1 547 449

## Beschreibung

Die vorliegende Erfindung betrifft einen Hochleistungspalettierer für das Ausrichten und Zusammenstellen von von einer Kaskade liegend angeförderten und durch diese stehend aufgerichteten, mit einer Folie oder Papier umhüllten Einheiten, insbesondere von zu Einzelreihen verpackten Haushaltspapierrollen, wie z.B. Küchenrollen oder Toilettenpapier.

Aus der CH 609 303 ist eine Vorrichtung zur Bildung von stapelflachen Gegenständen, z.B. von Schokoladentafeln, bekannt geworden, bei welcher die zu Einheiten verpackten Gegenstände, welche sich mit einer ersten Fläche auf einer ersten Fördereinrichtung befinden, mit dieser transportiert und mit einer Umlenkeinrichtung auf eine zweite kaskadenförmig zur ersten angeordnete Fördereinrichtung übergeben werden, auf der sich die Einheiten mit einer zweiten Fläche befinden und auf der die Einheiten mit einem ersten Schieber gegen einen Anschlag geschoben werden. Dabei weist der erste Förderer ein endloses Band und der zweite Förderer Zinken auf, mit deren Hilfe eine vollständige Gruppe von Einheiten in eine Ausgangslage geschoben werden.

Die DD-PS 131 363 beschreibt eine Dreh- und Stapelvorrichtung für Stückgut mit prismatischer Form mit einer kaskadenförmigen Anordnung von Förderern, einer Dreheinrichtung und parallel angeordneten weiteren Förderern sowie einem Hubtisch.

Aus der EP 0 330 994 A1 letztlich ist eine Vorrichtung zum Beladen von Paletten mit Stückgütern bekannt geworden, die eine Stapeleinrichtung für einen Verbundstapel und einen Drehtisch für Paletten aufweist.

Derartige Palettierer sammeln und richten zu relativ großen, mehrreihigen Einheiten verpackte Gegenstände auf den Paletten aus, die als solche in den Verkauf gelangen und von der Palette entnommen werden. Dazu werden diese Einheiten lagenweise auf sogenannten Trays aus Karton gesammelt und übereinandergestapelt. Diese Vorgehensweise hat unter anderen zwei wesentliche Nachteile. Zum einen fällt durch die Trays zu entsorgender Abfall an, zum anderen sind die Einheiten für den Endverkauf zu groß, so daß die Verpackung - die Folie - vom Kunden oder vom Personal aufgerissen werden muß.

Demgegenüber hat sich die vorliegende Erfindung die Aufgabe gestellt, einen mit großer Geschwindigkeit arbeitenden Palettierer zu schaffen, mit dem verkaufsfähige Einheiten ohne Trays zu einem stabilen Stapel geschichtet werden können.

Die Lösung dieser Aufgabe gelingt bei einem Palettierer der eingangs geschilderten Art, der die im Kennzeichen des Hauptanspruches genannten Merkmale aufweist.

Dabei erfolgt die Ablage der Einheiten auf aus Papieren bestehenden Zwischenlagen in unregelmäßiger, frei wählbarer Ordnung, wobei die einzelnen, aus Reihen von wenigen, z.B. vier Rollen bestehenden Einheiten überschneidend, d.h. häufig um 90° gedrehter Form, aneinandergefügt und ebenso gestapelt werden können, um sich derart durch Reibung aneinander abzustützen.

Der erfindungsgemäße Palettierer kann mit sehr hohen Taktzahlen arbeiten und ist in der Lage, jedes gewünschte Packungsmuster herzustellen. Dabei werden die Einheiten, d.h. Rollenreihen, von z.B. vier Einzelrollen zunächst auf dem ersten Förderband gesammelt, das die Länge einer Palettenkante aufweist, so daß hier auch auf der Palette eine vollständig anliegende, gleich ausgerichtete Packungsreihe gebildet werden kann, ohne daß in diesem Falle der Drehteller zum Einsatz kommt. Von diesem Förderband werden die gesammelten Rollenreihen (meist etwa vier) auf den Drehteller übergeben, wozu der erste Anschlag in die entsprechende Stellung gefahren ist, und dort jeweils um 90° gedreht oder in der übernommenen Konfiguration auf das zweite Förderband geschoben, in gewünschter Anordnung gesammelt und von diesem wiederum quer auf die Palette übergeben, so daß ein Zick-Zack-Weg entsteht.

Die gewünschte, von den Maßen der Rollenreihen abhängige Sammelform läßt sich programmgesteuert vorgeben, wobei diese meist aus Platzgründen einem quadratischen Grundriß angenähert wird.

Weiterhin wird vorgeschlagen, oberhalb des an die Kaskade anschließenden Transportbandes ein mit dessen Geschwindigkeit umlaufendes Deckband anzuordnen, das dafür sorgt, daß die Einheiten auf diesem ersten Förderband bei der Übernahme von der Kaskade nicht kippen.

Eine wesentliche Steigerung der Arbeitsgeschwindigkeit läßt sich zusätzlich erreichen, wenn der Schiebebalken nach der Übergabe der zunächst gesammelten Einheiten an den Drehteller bzw. an diesen und gegebenenfalls wie oben geschildert teilweise an das zweite Transportband, nicht auf demselben Wege zurückgefahren, sondern erst in Längsrichtung aus dem Bereich der gesammelten Einheiten herausbewegt und dann zurückgezogen wird, so daß in dieser Zeit neue Einheiten auf dem ersten Transportband gegen den Anschlag gesammelt werden können.

Für eine schnelle, präzise und einfach zu steuernde Bewegung des Schiebebalkens wird vorgeschlagen, diesen für jede Bewegungsrichtung mit je einem Elektromotor auszurüsten, wobei die Steuerung selbst über Zahnstangen, Schneckentriebe oder dergleichen erfolgen kann, und wobei die Montageunterflur unterhalb des Transportbandes über ein bewegliches Schwert am Ende des Transportbandes erfolgen kann, auf dem der Balken befestigt ist und zu diesem in Längsrichtung verfahren werden kann.

Bei zu hohen Reibungswerten zwischen dem zweiten Band und dem darauf befindlichen Gut, wie etwa bei relativ hohen Packungen, kann es passieren, daß eine erste übernommene Packungsgruppe auf diesem Band gegen den dort befindlichen Anschlag geführt wird und dort bei laufendem Band in Wartestellung auf eine zweite anzuschließende Packung infolge der Reibung und wegen des Fehlens einer zweiten Stütze nach hinten, d.h. gegen die Bewegungsrichtung des Bandes, umkippt. Um dieses sicher zu vermeiden, wird vorgeschlagen, das zweite Band geteilt auszubilden und geteilt anzutreiben, so daß der zweite Bandabschnitt bedarfsweise abgeschaltet werden kann.

Es wird vorgeschlagen, den Schieber zur Übergabe der aufgerichteten, von der Kaskade angelieferten Einheiten über eine Kulissensteuerung anzutreiben, so daß die Vorwärtsbwegung langsam und das Zurückziehen schnell erfolgen.

Es hat sich in der Praxis erwiesen, daß z.B. bei nicht sorgfältiger Behandlung der Stapelung durch äußere Einwirkung, durch Personal oder andere Störungen oder nach dem Abliefern der Palette beim Auspacken in der Verkaufsstätte, insbesondere aus der obersten Lage, Pakete herausfallen können.

Die vorliegende Erfindung hat sich daher weiterhin die Aufgabe gestellt, den vorliegenden Palettierer dahingehend zu verbessern, daß das Herausfallen von Paketen beim Stapelbilden oder beim Kunden sicher vermieden wird.

Zur Lösung dieser Aufgabe schlägt die vorliegende Erfindung vor, am Schieber eine oder mehrere Düsen zur Ausbringung eines adhäsiven Mittels anzuordnen. Da dieses Mittel nur an bestimmten Seiten der Einheiten und nur an bestimmten Einheiten ausgebracht werden darf - so müssen z.B. Außenseiten unbenetzt bleiben, da sonst ein Zusammenschieben im Palettierer und ein Ausrichten an den Formationsleisten wie Anschläge und Schiebebalken unmöglich wäre - ist weiterhin die Düse mit einer Programmierten Steuerung verbunden, die unabhängig von der Lage, der Schicht und dem gewählten Stapelmuster lediglich die jeweiligen Folienflächen der Einheiten benetzt, an denen eine Adhäsion notwendig und zuverlässig ist.

Das über die Düse abgegebene Mittel ist vorzugsweise nicht abbindend, d.h. dauerfeucht. Da die Diffusion des im Klebstoff enthaltenen Lösungsmittels durch die zur Verpackung gewählte Folie nur sehr gering ist, die zu verbindenden Flächen groß und die auftretenden Kräfte klein sind, bestehen an den Klebstoff keine großen Anforderungen. Überraschenderweise hat sich herausgestellt, daß bei zeitlich nicht zu langen Transportwegen zwischen Verpackung und Verkauf ein Besprühen mit Wasser genügt, um eine ausreichende Adhäsion der Einheiten aneinander zu gewährleisten.

Anhand der beiliegenden Figuren wird die vorliegende Erfindung näher erläutert.
- **Figur 1**: zeigt dabei einen Palettierer in dreidimensionaler Darstellung,
- **Figur 2**: zeigt das Förderschema,
- **Figur 3**: zeigt einen Palettierer mit Adhäsionsmittel ausbringenden Düsen.

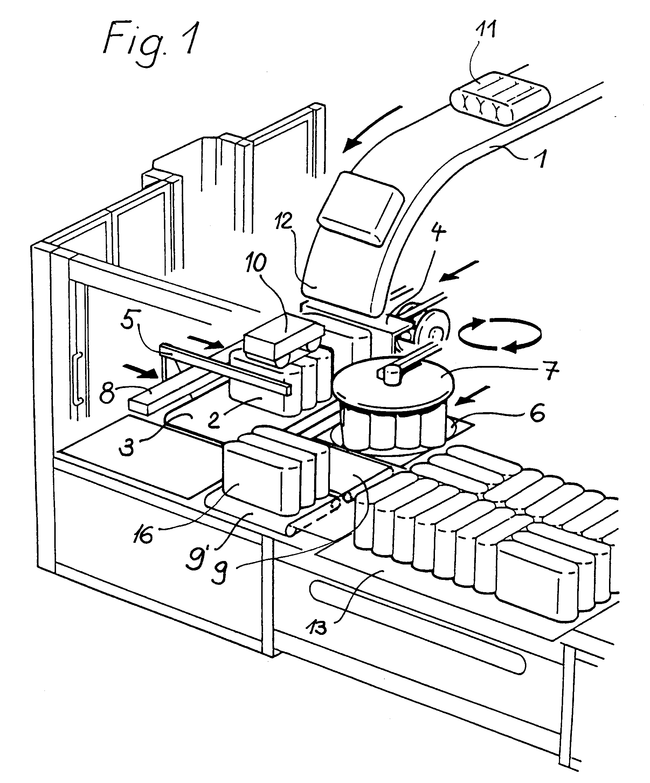

**Figur 1**: Über eine Förderband-Kaskade 1 wird zunächst liegend eine in Folie oder Papier verpackte Rolleneinheit 11, hier mit vier Rollen, liegend angefördert und durch den absteigenden Teil der Kaskade stehend auf eine Schwelle vor dem ersten Transportband 3 fallengelassen. Über dem Transportband 3 ist ein verfahrbarer Anschlag 5 angeordnet, der je nach Stellung die gewünschte Anzahl von Einheiten als Einzelreihen 2 sammelt.

Unterhalb der Mündung 12 der Kaskade 1 befindet sich ein kulissengesteuerter Schieber, der die Einheit 11 auf das erste Transportband 3 übergibt, dabei relativ langsam vorwärts- und schnell zurückbewegt wird. Um bei hohen Arbeitsgeschwindigkeiten ein Kippen der Einheiten auf dem ersten Transportband zu verhindern, ist über diesem ein Deckband 10 angeordnet, das mit derselben Geschwindigkeit umläuft, wie das darunter befindliche Transportband 3. Seitlich neben den gesammelten Einheiten 11 befindet sich der Schiebebalken 8. Nachdem die gewünschte Zahl von Rolleneinheiten 11 gegen den Anschlag 5 anliegen, wird der Schiebebalken 8 quer über das erste Transportband 3 gefahren und schiebt die gesammelten Einheiten zum Drehteller 6, auf die das Druckstück 7 gegebenenfalls abgesenkt wird und die Kombination festhält. Dabei kragt das Druckstück 7 über den Schiebebalken 8.

Sobald der Schiebebalken 8 das erste Transportband 3 überquert hat, wird er in Bewegungsrichtung des Obertrums des Transportbandes 3 soweit gefahren, bis er frei zurückgezogen und in Ausgangsstellung gebracht werden kann. Diese Bewegung ist abhängig von der gewünschten Anzahl der gegen den einstellbaren Anschlag 5 gesammelten Einheiten. Um eine schnelle Rückstellung und eine präzise programmierbare Bewegungsführung zu ermöglichen, ist für die Längs- und die Querbewegung je ein eigener elektromotorischer Antrieb über Zahnstangen, Schneckenwellen oder dergleichen vorgesehen, so daß zeit- und positionsgenau ohne großen konstruktiven Aufwand gesteuert werden kann.

Hinter dem Drehteller befindet sich ein zweiter Schieber, der die Einheiten vom Drehteller - nach erfolgter Drehung oder auch in angelieferter Stellung - auf das zweite Transportband 9 übergibt. Dieses zweite Transportband weist die Länge einer (Euro)Palettenkante auf. Von hier werden die zu etwa Palettenkantenlängen gesammelten und in gewünschter Ausrichtung und Menge gesammelten Einheiten mit Hilfe eines dritten Schiebers (nicht dargestellt) auf die Palette übergeben und zu vollständigen Lagen zusammengeschoben. Die Lagen werden mit der Palette abgesenkt, darüber das Lagenpapier gelegt und die neue Lage auf diesem angeordnet.

Die Einheiten 11 können mit Hilfe des erfindungsgemäßen Palettierers derart miteinander kombiniert werden, daß statisch stabile Gebilde entstehen, wobei die Lagen insbesondere auch unterschiedliche Muster aufweisen können, so daß z.B. stabile Außenkanten im Bereich der Rundungen der Einheiten mit den nachgiebigen der Längsseiten abwechseln. Derart ist es möglich, endverkaufsfähige Mengen von z.B. Haushaltsrollen (im vorliegenden Beispiel vier) als Einheiten auf Paletten zu stapeln und gleichzeitig auf die herkömmlichen Trays zu verzichten.

Das zweite Transportband ist vorzugsweise geteilt ausgebildet und weist einen ersten Abschnitt 9 und einen zweiten Abschnitt 9' auf, so daß eine erste angelieferte Packung 16 von Einzelreihen in Wartestellung unbeeinflußt von Reibung auf eine zweite auf einem unbewegten Bandabschnitt 9' stehen kann.

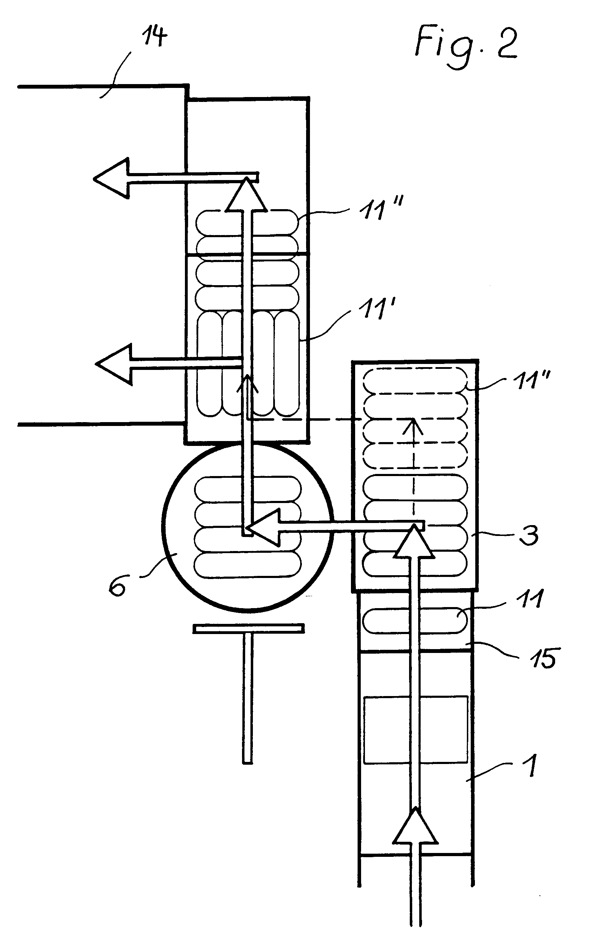

In **Figur 2** ist das erfindungsgemäße Zick-Zack-Schema der Anlieferung der Einheiten 11 zur Palette 14 dargestellt, wobei die Pfeile die Förderrichtung andeuten.

Die Kaskade 1 liefert die Einheiten 11 auf die Ablage 15, von wo sie in gewünschter Zahl auf dem ersten Transportband gesammelt und von dort quer auf den Drehteller abgegeben werden, um von hier wieder parallel zur ersten Transportrichtung auf dem zweiten Transportband nach Drehung 11' oder unter Beibehalt der Ausrichtung 11' in erforderlicher Menge gesammelt und wiederum quer dazu auf die Palette 14 geschoben werden (ausgezeichnete Pfeile).

Das erste Transportband 3 überragt den Drehteller in Förderrichtung, so daß auch in größerer Länge zusammengefaßte Einheiten, als auf dem Teller Platz haben, übergeben werden können, wobei letzterer natürlich (taktweise) außer Funktion bleibt, siehe gestrichelte Pfeile.

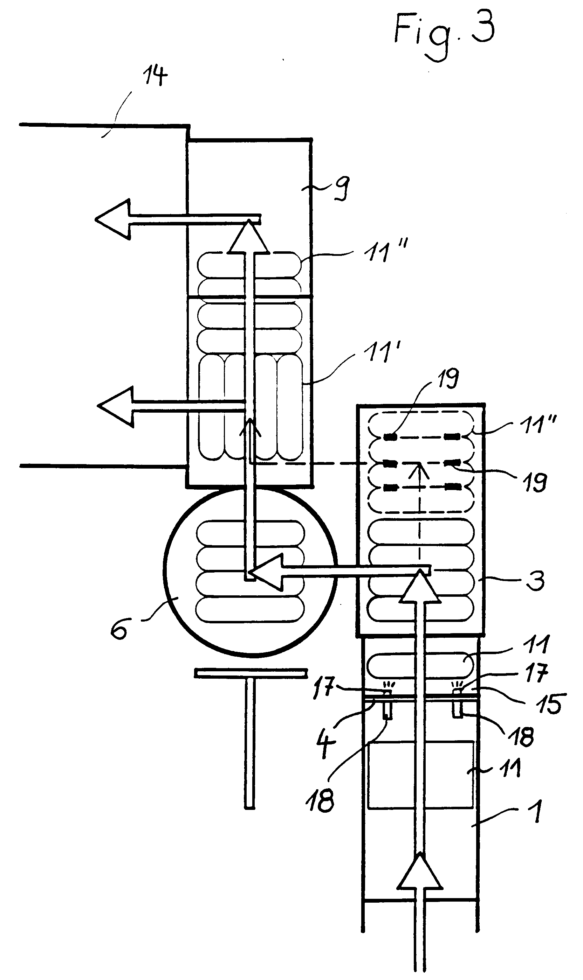

**Figur 3**: Über die Kaskade 1 wird liegend eine mit Kunststoffolie oder Papier umhüllte Rolleneinheit 11 angeliefert und aufgerichtet. Hinter der stehenden Rolleneinheit 11 befindet sich der Schieber 4 mit zwei Düsen 17 und Zuführungen 18 für das Adhäsionsmittel, z.B. Wasser. Die Düsen 17 sind programmgesteuert schaltbar, so daß Adhäsionsmittel nur dann ausgebracht wird, wenn es erforderlich ist.

Auf dem ersten Transportband 3 werden die Rolleneinheiten zu Paketen zusammengeschoben, gegebenenfalls auf dem Drehteller 6 um 90° gedreht - 11' - und an das zweite Transportband 9 übergeben, von welchem sie in den gewünschten Mustern 11', 11'' auf die Palette gelangen.

In den Einheiten 11'' sind Adhäsionsstellen 19 angedeutet, die lediglich innen liegen, d.h. nach außen weisende Flächen sind nicht benetzt. Im Beispiel sind alle vier Einheiten adhäsiv miteinander verbunden, es können auch lediglich die jeweils außenliegenden miteinander verklebt werden, da hier die Kippgefahr naturgemäß größer ist.

Nach dem Aufsprühen des Adhäsionsmittels über die Düsen 17 werden die Rolleneinheiten durch den Schieber 4 zusammengeschoben, wonach die Verpackungsfolie großflächig aneinanderliegt und so ein Verdunsten nach außen oder ein diffundieren in das Innere der Einheiten 11 sehr stark eingeschränkt ist, so daß das Adhäsionsmittel unter Luftabschluß steht und damit lange feucht bleibt bzw. im Falle von Wasser adhäsiv bindet.

### Bezugszeichenliste

- 1: Kaskade
- 2: Einzelreihen
- 3: erstes Transportband
- 4: Schieber
- 5: Anschlag
- 6: Drehteller
- 7: Druckstück
- 8: Schiebebalken
- 9, 9': zweites Transportband
- 10: Deckband
- 11: Rolleneinheit
- 12: Kaskadenmündung
- 13: Lagenpapier
- 14: Palette
- 15: Ablage

## Patentansprüche

1. Vorrichtung, die zu Einheiten verpackte Gegenstände, welche sich mit einer ersten Fläche auf einer ersten Fördereinrichtung befinden, mit dieser transportiert und mit einer Umlenkeinrichtung auf eine zweite kaskadenförmig zur ersten angeordnete Fördereinrichtung übergibt, auf der sich die Einheiten mit einer zweiten Fläche befinden und auf der die Einheiten mit einem ersten Schieber gegen einen Anschlag geschoben werden,
**dadurch gekennzeichnet,**
a) daß die zweite Fördereinrichtung ein erstes Transportband (3) ist,
b) daß auf einer Seite am ersten Transportband (3) ein quer zu diesem zu verfahrender Schiebebalken (8) angeordnet ist,
c) daß sich auf der anderen Seite neben dem ersten Transportband (3) ein Drehteller (6) mit darüberliegenden, auf die Einheiten (11) absenkbarem, drehbarem Druckstück (7) sowie einem senkrecht zum Balken (8) zu bewegender Schieber befindet,
d) daß das erste Transportband in seiner Förderrichtung den Drehteller überragt, und
e) daß an dem Drehteller (6) in Richtung parallel zum ersten Transportband (3) ein zweites Transportband (9, 9') angeschlossen ist, auf das Gegenstände von dem Drehteller (6) oder dem ersten Transportband (3) geschoben werden und von dem die zum Verbund ausgerichteten Einheiten auf eine Palette oder eine darauf befindliche Lage geschoben werden.

2. Vorrichtung nach Anspruch 1, **dadurch gekennzeichnet,** daß oberhalb des ersten Transportbandes (3) ein umlaufendes Deckband (10) angeordnet ist,

3. Vorrichtung nach Anspruch 1 bis 2, **dadurch gekennzeichnet**, daß der Schiebebalken (8) sowohl in Längsals auch in Querrichtung soweit verfahrbar ist, daß er die auf dem ersten Transportband (3) befindlichen Einheiten horizontal umfahren kann.

4. Vorrichtung nach mindestens einem der Ansprüche 1 bis 3, **dadurch gekennzeichnet**, daß der Schiebebalken (8) für jede Bewegungsrichtung einen eigenen elektromotorischen Antrieb aufweist.

5. Vorrichtung nach mindestens einem der Ansprüche 1 bis 4, **dadurch gekennzeichnet**, daß das zweite Band (9, 9') geteilt ausgebildet ist und beide Teile (9, 9') separat antreibbar sind.

6. Vorrichtung nach mindestens einem der Ansprüche 1 bis 6, **dadurch gekennzeichnet**, daß der Schieber eine oder mehrere Düsen zum Benetzen der Folienflächen der Einheiten mit einem adhäsiven Mittel aufweist, wobei die Düse derart steuerbar ist, daß lediglich vorgegebene Flächen benetzt werden.

7. Vorrichtung nach mindestens einem der Ansprüche 1 bis 7, **dadurch gekennzeichnet**, daß das über die Düsen abgegebene Mittel Wasser oder ein nicht abbindender dauerfeuchter Klebstoff ist.

## Claims

1. Device which transports articles packed into units, which are present with a first surface on a first conveying device, conveyed with this and, with a deflecting device, transferred to a second cascade-like conveying device, disposed to the first one, on which the units are present with a second surface and on which the units are pushed with a first pusher against a stop, characterised in
a) that the second conveying device is a first conveyor belt (3),
b) that on one side, on the first conveyor belt (3), is arranged a pusher bar (8) to be moved transversely to this,
c) that on the other side, next to the first conveyor belt (3), is present a rotary table (6) with opposite-lying rotatable thrust piece (7) lowerable on to the unit (11), as well as pusher to be moved vertically to the bar (8),
d) that the first conveyor belt surmounts the rotary table in its conveying direction, and
e) that on the rotary table (6), in the direction parallel to the first conveyor belt (3), is connected a second conveyor belt (9,9') on to which the articles are pushed from the rotary table (6) or from the first conveyor belt (3) and from which the units aligned for connection are pushed on to a pal let or a layer present thereon.

2. Device according to claim 1, characterised in that a revolving covering belt (10) is arranged above the first conveyor belt (3).

3. Device according to claim 1 to 2, characterised in that the pusher bar (8) is movable not only in the longitudinal but also in the transverse direction to such an extent that it can horizontally by-pass the units present on the first conveyor belt (3).

4. Device according to at least one of claims 1 to 3, characterised in that the pusher bar (8) has, for each direction of movement, its own electromotor drive.

5. Device according to at least one of claims 1 to 4, characterised in that the second belt (9,9') is formed divided up and the two parts (9,9') are separately drivable.

6. Device according to at least one of claims 1 to 6, characterised in that the pusher has one or more nozzles for the wetting of the foil surfaces on the units with an adhesive agent, whereby the nozzle is controllable in such a manner that only predetermined surfaces are wetted.

7. Device according to at least one of claims 1 to 7, characterised in that the agent delivered via the nozzles is water or a non-setting, constantly moist adhesive.

## Revendications

1. Dispositif, qui transporte avec un premier dispositif de transport des objets emballés en unités qui se trouvent par une première surface sur celui-ci, et qui, par un dispositif de déviation, les transfère sur un deuxième dispositif de transport qui est agencé par rapport au premier en forme de cascade et sur lequel les unités se trouvent avec une deuxième surface et sont poussées contre une butée par un premier poussoir, caractérisé
a) en ce que le deuxième dispositif de transport est une première bande transporteuse (3),
b) en ce qu'une barre coulissante (8) à déplacer transversalement à la première bande transporteuse (3) est agencée d'un côté de celle-ci,
c) en ce que de l'autre côté, à côté de la première bande transporteuse (3), se trouve un plateau rotatif (6) pourvu d'une pièce de pressage (7) rotative qui est située au-dessus et peut être abaissée sur les unités (11), ainsi que d'un poussoir à déplacer perpendiculairement à la barre (8),
d) en ce que la première bande transporteuse dépasse, dans son sens d'avancement, le plateau rotatif, et
e) en ce que, au plateau rotatif (6) est raccordée, en direction parallèle à la première bande transporteuse (3), une deuxième bande transporteuse (9, 9') sur laquelle des objets provenant du plateau rotatif (6) ou de la première bande transporteuse (3) sont poussés et à partir de laquelle les unités alignées pour l'assemblage sont poussées sur une palette ou une couche située dessus.

2. Dispositif suivant la revendication 1, caractérisé en ce qu'une bande de recouvrement en circulation (10) est agencée au-dessus de la première bande transporteuse (3).

3. Dispositif suivant l'une des revendications 1 et 2, caractérisé en ce que la barre coulissante (8) est déplaçable aussi bien en direction longitudinale qu'en direction transversale de façon qu'elle puisse contourner horizontalement les unités situées sur la première bande transporteuse (3).

4. Dispositif suivant au moins l'une des revendications 1 à 3, caractérisé en ce que la barre coulissante (8) présente pour chaque sens de déplacement un organe d'entraînement propre par moteur électrique.

5. Dispositif suivant au moins l'une des revendications 1 à 4, caractérisé en ce que la deuxième bande (9, 9') est réalisée sous une forme divisée et en ce que les deux parties (9, 9') peuvent être entraînées séparément.

6. Dispositif suivant au moins l'une des revendications 1 à 5, caractérisé en ce que le poussoir présente un ou plusieurs ajutages pour l'humectation des surfaces de feuille des unités par un produit adhésif, l'ajutage pouvant être commandé de telle façon que seules des surfaces prédéterminées soient humectées.

7. Dispositif suivant au moins l'une des revendications 1 à 6, caractérisé en ce que le produit délivré par les ajutages est de l'eau ou une matière adhésive humide de manière durable, non du type à prise.
